Europäisches Patentamt

**European Patent Office**

**Office européen des brevets**

(11) Publication number: **0 127 355**
**A2**

(12) # EUROPEAN PATENT APPLICATION

(21) Application number: **84303134.5**

(22) Date of filing: **09.05.84**

(51) Int. Cl.³: **A 47 J 37/04**

(30) Priority: **23.05.83 US 496912**

(43) Date of publication of application:
**05.12.84 Bulletin 84/49**

(84) Designated Contracting States:
**DE FR GB NL**

(71) Applicant: **PET INCORPORATED**
**400 South Fourth Street**
**St. Louis, MO 63102(US)**

(72) Inventor: **Wells, Harold D.**
**3 Shari**
**St. Louis Missouri 63122(US)**

(74) Representative: **Serjeant, Andrew Charles**
**25 The Crescent King Street**
**Leicester, LE1 6RX(GB)**

(54) **Ovens.**

(57) An oven (A) has a conveyor (27, 29) for carrying products through a heating chamber (25). Entrance (45) and exit sections (41, 42) are at lower level than the heating chamber (25). An aperture (73) along the bottom of the chamber (25) is provided with means (91) for controlling the size of the aperture (73). The means (91) may be of various configuration. Controlling the size of the aperture (73) affects the atmosphere in the chamber (25), and thus the cooling and flavour of the products.

FIG. 6

TITLE:

Ovens

DESCRIPTION:

Technical Field

The invention relates to ovens suitable for restaurant, industrial and institutional cooking of greasy foods, and particularly meat products such as hamburgers, steaks and chops which tend to flare up and char as grease rendered by the food catches fire, as will occur when exposed to temperatures sufficient for grilling or broiling. This is particularly so for beef, pork and lamb, but also occurs with fowl, including chicken, turkey and duck.

Background Art

The Applicant's earlier Patent Specifications US 4008996 and 4366177 disclose ovens having conveyors for carrying products through heating chambers, the latter with ingress and egress openings for the products at a lower level than the heating chamber so that the chamber entraps an oxygen-starved atmosphere for flameless heating. This preserves the taste, succulence and moisture of food products by not utilizing heated air which tends to dry the food.

A problem has been discovered in that the cooking, when carried out in a flameless manner within a entrapped oxygen-starved atmosphere, tends over a period of time to build up in the entrapped atmosphere grease vapours and smokey products of the broiling process. The introduction of cold, uncooked articles of meat results in condensation on the cold meat surfaces of the said grease vapour and smokey products, imparting an undesirable taste to the cooked product. Additionally, there is a demand for what is termed "char-broiled" meat products, that is to say, meat products broiled with at least some impringement of flame which imparts a slightly carbonized taste like that resulting from broiling over an open fire. Accordingly, there is a need for a delicate balance of a rather high broiling temperature and a small amount of grease being burned with slight flame impingement for sizzling the meat.

## The Invention

According to the invention, there is provided an aperture along the bottom of the heating chamber, and means for controlling the size of the aperture and thus the atmosphere in the chamber. This makes it possible to solve the above mentioned problems.

There is a controlled interchange of the atmosphere in the chamber with that outside while maintaining a trapped somewhat oxygen-starved atmosphere inside. Smoking or flavouring elements (such as through the use of wood chips or the like) may be introduced during cooking.

Rapid and easy cleaning by the use of a self-cleaning cycle can be effected. Oven components may be rapidly removed for separate cleaning. The oven can be operated by relatively less skilled personnel, and simply manufactured in a reliable and durable configuration capable of high volume commercial use.

## Drawings:

Figure 1 is a side elevation of an oven in accordance with the invention;

Figure 2 is a top plan of the oven of Figure 1;

Figure 3 is a left end elevation, partly in section on 3-3 in Figure 1;

Figure 4 is a vertical cross-section on 4-4 in Figure 1;

Figure 5 is a vertical cross-section on 5-5 in Figure 1;

Figure 6 is a vertical longitudinal section on 6-6 in Figure 2;

Figure 7 is a horizontal section on 7-7 in Figure 1;

Figures 8 and 9 are respectively a simplified cross-section of the oven and perspective view of a control body in the oven of Figure 1;

Figures 10 and 11 are similar views to Figures 8 and 9 illustrating a control body of rectangular section;

Figures 12 and 13 are similar views illustrating a control body of semi-circular curved plate configuration;

Figures 14 and 15 are similar views illustrating a control body of roof section configuration;

Figures 16 and 17 are similar views illustrating a control body of flat, plate-like character;

Figures 18 and 19 are similar views illustrating a flat control body of perforate or screen-like character; and

Figures 20 and 21 are similar views illustrating a control body which is cylindrical and liquid-cooled.

## Best Mode

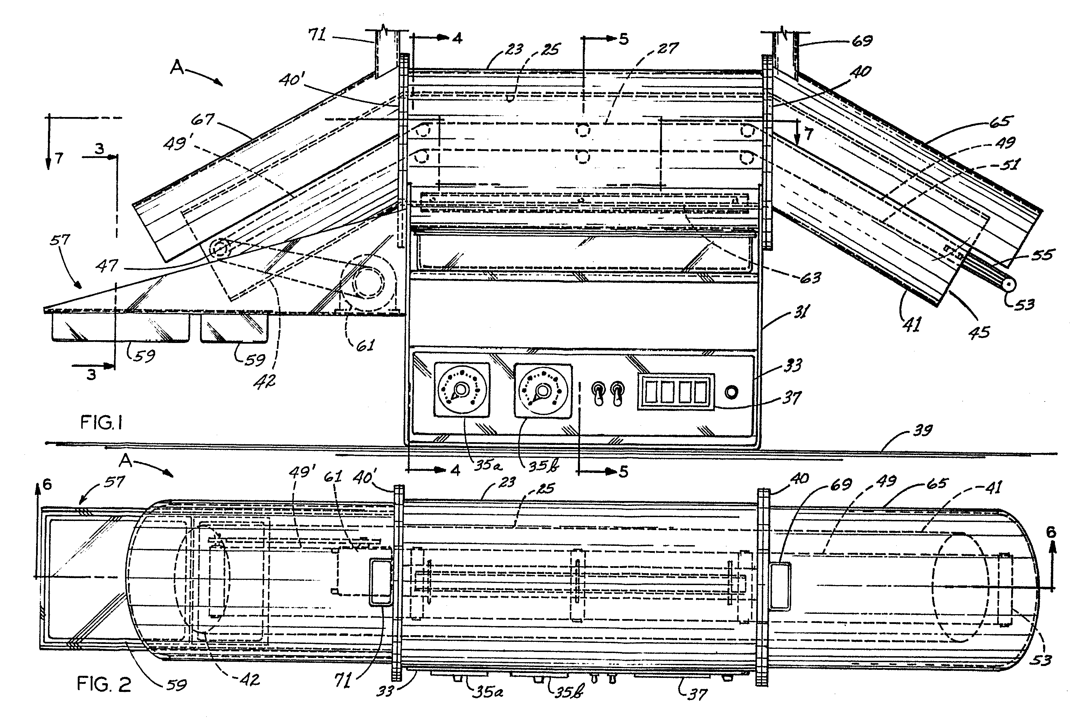

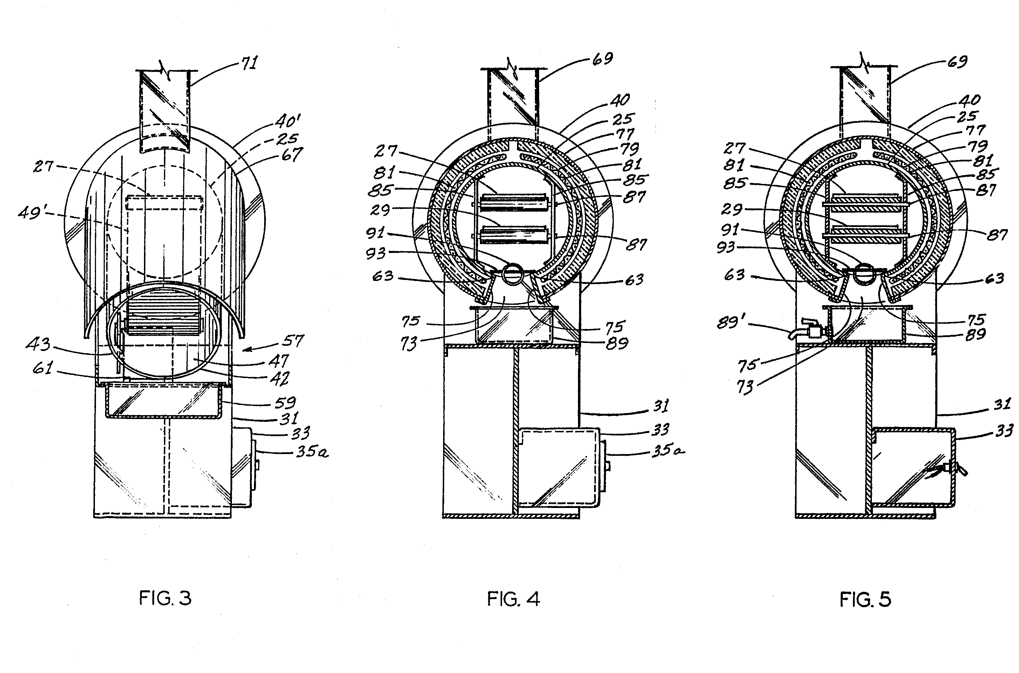

With particular reference to Figures 1 and 2, an oven A has a central portion 23 containing a tubular tunnel-form heating chamber 25 of rectilinear configuration. Upper and lower reaches 27, 29 of an endless chain or link belt conveyor for conveying of food products pass through the chamber 25 for carrying food products so that they can be cooked by the emission of infrared radiation directly from the walls of the chamber 25. The oven A is seated upon a central base 31 including a control panel 33 provided with controls 35a,35b for individually selecting upper and lower temperatures to be provided by electric heater elements 81 (Figure 4). These heaters cause the interior surface of chamber 25 to become heated, and so provide direct emission from such surfaces of infrared raidant energy. The energy radiates toward the centre of the chamber 25 from the large surface area thus provided, and is directly absorbed by food products being conveyed through the chamber 25. The controls also include a timer 37 for selecting the actual time in minutes and seconds for travel of food products through the chamber 25. The base 31 may be directly seated upon a table top or counter 39 of convenient location in a restaurant or other institution where the oven is to be utilized.

Extending from opposite ends of the centre section or unit 23, and secured to end flanges 40, 40', are sloping entrance and exit sections 41,42, each of tubular configuration, for providing an entrance 45 and an exit 47 for the oven A. Inclined upper and lower reaches 49, 51 of the conveyor extend upward through the entrance section 41. The conveyor passes around a sprocket 53, and provides an exposed upper reach portion 55 as a loading station at which food products may be placed. The conveyor extends upwards at an angle (which typically may be 30 to 45°) into the chamber 25. The food products then continuously travel along the upper horizontal conveyor reach 27 and down an inclined reach 49' in a tubular section 43, for delivery through an exit 47 to a delivery station 57. At the station 57, there are a number of serving or storage pans 59. A speed-controlled, electronically driven motor 61 powers the endless conveyor.

Both the entrance 45 and exit 47 are located with their upper extent lower than the lowermost point or floor 63 of the chamber 25. Both remain open at all times during operation. Over sections 41,42 are semi-circular shrouds 65,67, inclined to conform to the general configuration of the respective sections, but extending over the entrance and exit 45, 47 for receiving smoke or other gases which may escape or be forced out of the entrance or exit. Corresponding flues or exhaust ducts 69, 71 extend upward from the upper ends of the shrouds for carrying away the smoke, gases and fumes.

Referring primarily to Figures 4 to 7, there is provided in the chamber 25 a rectangular elongated aperture 73; the chamber 25 is in the form of a single continuous rolled sheet of high temperature stainless steel provided with a pair of outwardly directed radial flanges 75. These flanges permit the chamber 25 to be connected to and located concentrically within a metal outer shell 77, also of generally circular configuration. This arrangement defines an annular space 79 in which are located the electric heaters 81 against the outer wall of the chamber 25, there being a blanket of alumina-silica refractory material for thermally insulating the outer shell 77. The conveyor reaches are supported in the chamber 25 by vertical braces 85 and horizontal supports or guides 87.

The aperture 73 is of rectilinear orientation and parallel along its longitudinal extent with an approximate centre line of the chamber 25. The aperture 73 extends substantially the entire length of the chamber 25, and is aligned below the conveyor reaches 27 and 29. The width of aperture 73 is slightly less than the width of the conveyor, and substantially less than the inside diameter of the chamber 25. The aperture 73 provides direct communication between the trapped, heated atmosphere within the chamber 25 and the atmosphere outside. Below, there is a trough, tray or pan 89 which extends the entire length of aperture 73 for receiving drainage of grease or other condensed liquids during operation. The tray 89 is provided with a drain valve 89' for continously or selectively draining of the grease and other liquids.

A number of different possible control bodies B are removably situated centrally along the length of the aperture 73 for controlling the extent and character of the communication (exchange of heat and vapour) between the oven and the outside atmosphere.

The aperture 73 being located only in the bottom of the chamber 25, does not readily permit the escape of trapped, heated air because this tends to rise and remain trapped within the oven chamber with a slight overpressure.

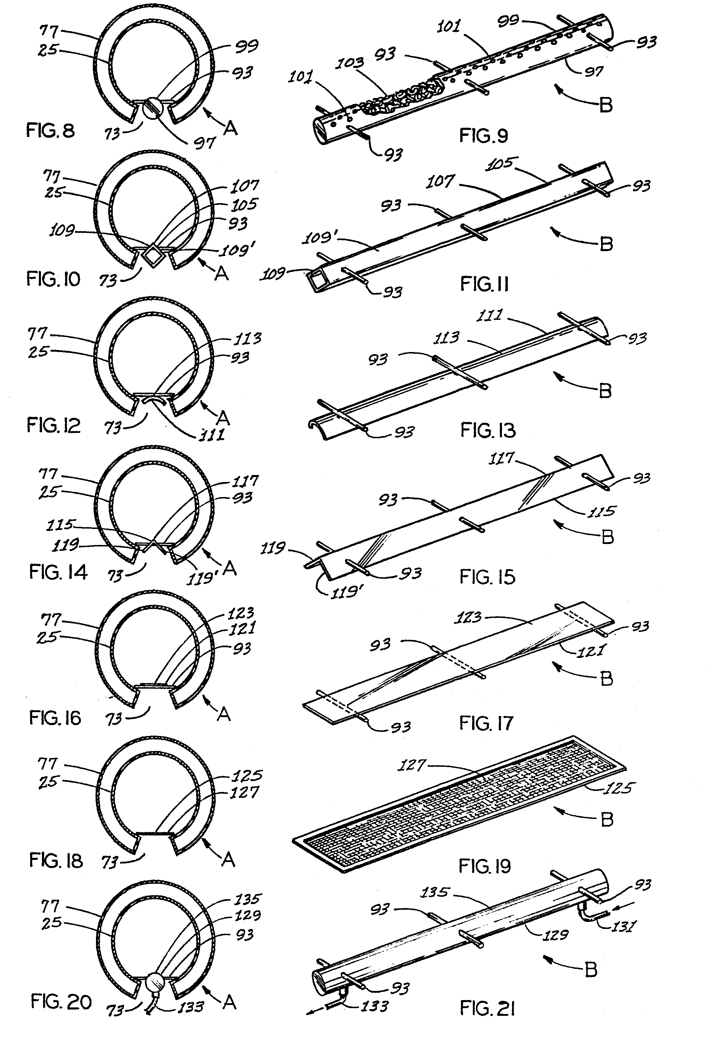

Figures 8 to 21 illustrate various possible control bodies B which may be placed along the aperture 73. Generally speaking, the control body B has an upward facing control surface, i.e. facing toward the interior of the oven yet positioned below the conveyor to receive dripping grease and other liquids.

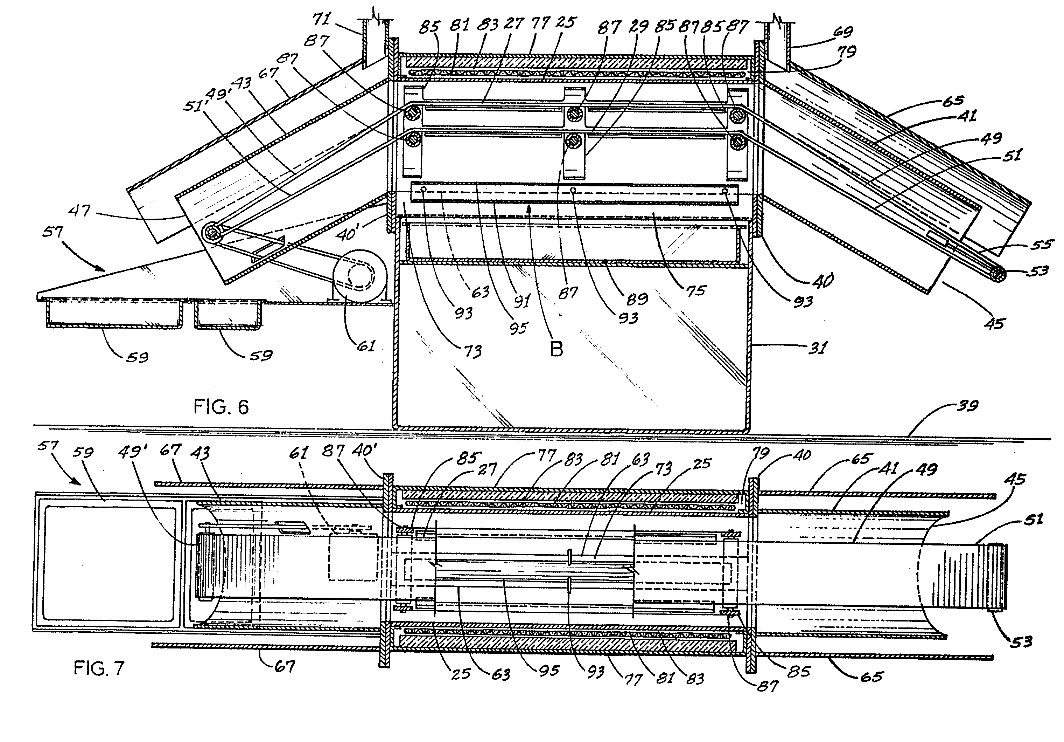

In Figure 6, there is a cylindrical control body 91 of diameter slightly less than the width of aperture 73. The body 91 is supported by radially extending pins or rods 93 which rest upon the floor 63 of the chamber 25 immediately adjacent the aperture 73. The outer surface 95 of control body 91 is cylindrical or generally convex. The control body 91 partially blocks the aperture 73, and its surface 95 provides for condensation of vapour and a drip-catching of grease or other liquids produced in operation. It also redirects infrared radiation upward into the oven, and so reduces the amount of energy which might otherwise be lost through radiation.

Since the control body 91 is exposed to the high temperature within the oven chamber and to the room temperature of the external atmosphere, a substantial temperature differential will tend to develop across it so that condensation of vapours present may condense on at least lower portions of the control surface 95.

The dimensions of the control body B as well as its form may vary depending upon the products to be cooked and the temperatures to be utilized in the oven. The cooking temperatures (i.e., the temperatures of the inner walls of the chamber 25) may vary from a few hundred degrees to $1200^{\circ}F$ ($665^{\circ}C$) or more, although more typically they may be from $600^{\circ}F$ ($330^{\circ}C$) to about $1150^{\circ}F$ ($645^{\circ}C$) for broiling. The width of the aperture 73 may be about three inches (8 cm) while the diameter of a control body B may be about two inches (5 cm), although it may be less or more to provide gaps of desired width at opposite sides of the control body from the adjacent edges of the aperture 73. The spacing may be varied over a desired range, such as 1/8 inch, (0.3 cm) 1/4 inch, (0.6 cm) or 1/2 inch (1.2 cm). The diameter or width of control body B need not be uniform or consistent. Thus a cylindrical form having an irregular surface may be substituted, or a control body B of tapering nature, e.g., wide at one end and narrow at the other. A control body B may be selected as to dimensions for achieving selective burning of the rendered grease upon the upward-directed control body surface, and permitting the food products to receive a slight or customer-preferred charring or singeing to impart a char-broiled character to the cooked meat product upon delivery. More or less moisture may be selectively condensed in order to control the build-up of smoke and vapour in the oven.

In Figures 8 and 9, a control body B is illustrated which takes the form of a closed-end cylindrical tube 97 provided along its length with the radial support extensions 93. The upper surface 99, being the control surface, is provided with numerous small openings 101.

The tube 97 is filled with chips 103 of charcoal, hardwood, mesquite or any of a number of different possible flavouring agents or smoke-producing agents for release through the openings 101 when the tube 97 is heated. Thus, for example, the tube 97 may be utilized to provide a hickory smoked effect when char-broiling or during the preparation· of ribs and other meat products.

Figures 10 and 11 illustrate a control body B in the form of a rectangular section length of tubing 105 provided with extensions 93 extending in an orientation causing the tubing 105 to occupy a position with a corner edge 107 directed upwardly toward the interior of the chamber 25 so that two walls 109, 109' become the control surface against which grease and liquids will drop when food products are conveyed through the oven. Such surfaces or walls 109, 109' readily reflect infrared energy.

Figures 12 and 13 demonstrate that the control body B may take the form of a length of material 111 which is of semi-circular cross-section, the radial supports being secured to the upper surface 113 of the element 111 which latter surface provides the control surface.

In Figures 14 and 15, a length of material 115 having a cross-section of roof-like character is shown in which a sharp edge or corner 117 is directed upward to provide flat control surface 119, 119' on opposite sides.

Figures 16 and 17 show the provision of a flat plate 121 for use as the control body B. The plate 121 receives and distributes grease being rendered during the cooking process for providing an enhanced burning of the grease and a greater flame impingement. The plate 121 may alternatively be slightly dished, or include an upward directed lip around its edges for enhancement of its grease capturing tendency. However, relatively little condensation of water vapour will result from a use of a control body B of the configuration shown in Figure 17, since the control surface 123 tends to remain hot during cooking.

In Figures 18 and 19, the control body B takes the form of a screen or plate 125 having either a mesh 127 or other perforate surface provided with closely spaced openings for serving as the control surface. Such plate 125 increases the communication between the interior and exterior atmospheres while permitting grease striking the surface 127 to be selectively burned for a flame impingement effect.

Figures 20 and 21 illustrate the use of a control body of a cylindrical liquid-cooled character wherein a closed end tube 129 is utilized, and to which a cooling liquid such as water is supplied at one end by a line 131 and withdrawn from the other end by a line 133. The control surface 135 of the entire tube 129 is caused by the cooling liquid circulation to be far cooler than would be the case of a control body such as elements 91, or 97. Thus, the cooled tube 129 will produce very substantial condensation but will almost entirely if not completely eliminate the combustion of grease rendered from the food products which falls upon its upward directed control surface 125.

The support extensions 93 permit the control body B to be easily installed within the aperture 73 or removed therefrom either for replacement purposes (as with a control body B of different configuration) or for cleaning. Such an arrangement permits simple an quick withdrawal of the control body B from oven A for separate cleaning. However, the control body B may remain in place to permit the oven to be cleaned by the use of a self-cleaning mode in which a removable plug may be inserted into both the opening 45 and the exit 47 whereby, with the oven heating units energized for producing a high emission temperature within the oven, the trapped air will rise to the high levels appropriate for carbonization and pyrolysis, as desired for self-cleaning.

A control body B may most preferrably be of a steel or stainless steel although alloys, plated and/or coated metals, including ceramics, and composite structures may be employed. A control body B of an igneous character, such as lava, stone or pumice, or other glassy or synthetic material may be employed. Various coatings for producing novel effects, such as flavour or smoke-producing agents, may be employed, as may be coatings of catalytic character.

CLAIMS:

1. An oven (A) having a conveyor (27,29) for carrying products through a heating chamber (25), entrance (45) and exit sections (41, 42) at a lower level than the heating chamber (25), characterized by an aperture (73) along the bottom of the chamber (25), and means (91) for controlling the size of the aperture (73) and thus the atmosphere in the chamber (25).

2. An oven (A) according to claim 1, in which the means (19) comprises a body (B) with a condensation or drip surface for vapours and grease.

3. An oven (A) according to claim 2, in which the body (B) is of less width than the aperture (73).

4. An oven (A) accoding to any of claims 1 to 3 including means (93) for removably supporting the means (91) in the aperture (73).

5. An oven (A) according to any of claims 1 to 4 in which the means (91) is tubular.

6. An oven (A) according to claim 5 in which the means (91) is of circular or rectangular cross-section.

7. An oven (A) according to any of claims 1 to 6 in which the means (91) is supplied with cooling fluid.

8. An oven (A) according to any of claims 1 to 7 in which the means (91) has a perforate surface for emitting smoke or flavouring substances.

9. An oven (A) according to any of claims 1 to 4 in which the means (91) is plate-like, curved, roof-like or of flat cross-section.

10.    An oven (A) according to any preceding claim, in which the entrance and exit sections (41, 42) are provided with shrouds (65, 67) and flues (69, 71).

FIG.1

FIG.2

0127355

FIG. 3

FIG. 4

FIG. 5

0127355

FIG. 6

FIG. 7

0127355

FIG.8

FIG.9

FIG.10

FIG.11

FIG.12

FIG.13

FIG.14

FIG.15

FIG.16

FIG.17

FIG.18

FIG.19

FIG.20

FIG.21